# EUROPEAN PATENT APPLICATION

(11) **EP 4 286 748 A1**
(43) Date of publication of application: **06.12.2023**
(21) Application number: 23177075.1
(22) Date of filing: 02.06.2023
(51) Int. Cl.: F24C 7/08, F24C 15/20

(54) **INTEGRATED COOKER, INTEGRATED COOKER CONTROL METHOD AND INTEGRATED COOKER CONTROL DEVICE**

(30) Priority: 02.06.2022 CN 202210619947
(71) Applicant: Foshan Shunde Midea Electrical Heating Appliances Manufacturing Co., Ltd., Foshan, Guangdong 528311 (CN)
(72) Inventor: SHAO, Tianyong, Foshan, 528311 (CN); ZHANG, Youzhi, Foshan, 528311 (CN)
(74) Representative: Whitlock, Holly Elizabeth Ann

(57) **Abstract**

The present disclosure proposes an integrated cooker, an integrated cooker control method and an integrated cooker control device, and the integrated cooker comprises: a cooker body, a controller, a functional driver device, at least one heating control device, at least one heating device and at least one functional device; the controller, the functional driver device, the heating control device and the heating device are all provided inside the cooker body; the heating control device is configured to receive a heating control signal sent by the controller to control the working state of the heating device; and the functional driver device is configured to receive a driving control signal sent from the controller to control the working state of the functional device. Through disposing the heating control device and a driver device inside the cooker body, communication wiring harnesses and power supply wiring harnesses can be decreased, and then the integration level of the electric control assembly of the integrated cooker is improved.

## Description

### FIELD

The present disclosure relates to the field of integrated cookers, and particularly relates to an integrated cooker, an integrated cooker control method and an integrated cooker control device.

### BACKGROUND

In the related art, an integrated cooker comprises a heating control device configured to control the working of a heating wire plate, and further comprises a driver device configured to drive a component such as a range hood, a fan and a steam device to work. Currently, the heating control device is generally disposed inside the panel of the integrated cooker, while the driver device is disposed near a corresponding functional device, for example, on the range hood, thus resulting in a low integration level of the control system of the integrated cooker.

### SUMMARY

The present disclosure aims to solve at least one of the problems that exist in the prior art or related art.

Thus, the first aspect of the present disclosure proposes an integrated cooker.

The second aspect of the present disclosure proposes an integrated cooker control method.

The third aspect of the present disclosure proposes an integrated cooker control device.

In view of this, the first aspect of the present disclosure proposes an integrated cooker, comprising:
a cooker body, a controller, a functional driver device, at least one heating control device, at least one heating device and at least one functional device; and the controller, the functional driver device, the heating control device and the heating device are all provided inside the cooker body; the heating control device is configured to receive a heating control signal sent by the controller to control the working state of the heating device; and the functional driver device is configured to receive a driving control signal sent from the controller to control the working state of the functional device.

In the embodiment, the integrated cooker comprises the cooker body, the controller, the heating control device and the functional driver device. The integrated cooker further comprises at least one functional device and at least one heating device, and the heating device can be a heating wire plate, a heating coil etc., and the functional device can be a range hood, a steam generator, a barbecue device etc. The controller is configured to receive a heating operation or a functional operation of a user, and after receiving the operation of the user, the controller sends a control instruction to the corresponding heating control device or the functional driver device.

Through disposing the heating control device and a driver device inside the cooker body, communication wiring harnesses and power supply wiring harnesses can be decreased, and then the integration level of the electric control assembly of the integrated cooker is improved.

In addition, the integrated cooker in the above embodiment proposed in the present disclosure can further comprise the following additional features:

in the above embodiment, the integrated cooker further comprises a communication circuit, and the controller is respectively connected to the heating control device and the functional driver device through the communication circuit, to determine a heating flag bit corresponding to the heating control device and a driving flag bit corresponding to the functional driver device after initialization when an initialization instruction is detected.

In the embodiment, the controller is configured to receive the heating operation or the functional operation of the user, and after receiving the operation of the user, the controller sends the control signal to the corresponding heating control device or the functional driver device through the communication circuit.

The communication circuit is configured to connect the controller with the corresponding heating control device and the corresponding functional driver device. When the integrated cooker is power-up initialized, in the case that the initialization instruction is detected, the controller acquires the flag bit of the connected device through the communication circuit, and the heating control device corresponds to the heating flag bit, and the functional driver device corresponds to the driving flag bit. The controller determines whether the corresponding interface of the communication circuit is connected to the heating control device or the functional driver device based on the corresponding flag bit.

For example, the integrated cooker is provided with a functional device range hood, and the functional driver device specifically is a range hood driving board for driving the range hood to work. The control system of the integrated cooker is provided with a heating control board L, a heating control board R and a range hood driving board.

After the power-up initialization, if the controller determines that the flag bit is a first heating flag bit 00, then it is determined that the interface is connected to the heating control board L; if the controller determines that the flag bit is a second heating flag bit 01, then it is determined that the interface is connected to the heating control board R; if the controller determines that the flag bit is a driving flag bit 11, then it is determined that the interface is connected to the range hood driving board.

In any one of the above embodiments, the communication circuit comprises: a master interface, connected to the controller, configured to receive the heating control signal and/or the driving control signal; at least one slave interface, connected to the heating control device and/or the functional driver device, configured to send the heating control signal and/or the driving control signal; and at least one identification circuit, configured to connect the first contact point of the master interface with the identification contact points of the slave interfaces, and each identification contact point corresponds to a driving flag bit or a heating flag bit after initialization.

In the embodiment, the devices in the control system of the integrated cooker can be integrated on one master control board, or disposed separately. And, the controller is a micro master control unit of the integrated cooker, and the controller can send corresponding signals to the functional driver device and the heating control device according to the operation of a user on a control panel, and then controls the heating wire plate to work to heat the cookware through the heating control device, and controls the range hood to work to discharge oil fume through a driver device.

The signal communication between the controller and the functional driver device and the signal communication between the controller and the heating control device are achieved by the communication circuit. Since the signal types of the driver device and the heating control device are different, and the heating control device comprises a control device in a single-tube heating manner and a control device in a half-bridge heating manner, the types of these control devices are different.

In the prior art, in order to ensure that the controller can identify the devices accurately, independent and different communication connecting circuits need to be designed for different devices, i.e., independent communication connecting circuits need to be designed for the heating control devices of different heating manners and the driver device. Therefore, during the production and assembly, it is necessary to ensure that the control device and the driver device correspond to the communication connecting circuits one by one, and thus the assembly cost is high.

During the use of the product, different heating wire plates or fan motors need to be replaced, which results in that the control device and the driver device cannot be replaced independently when they need to be replaced, and the communication connecting circuits need to be replaced at the same time, while the communication connecting circuits are generally integrated on the master control board, and as a result, the whole master control board needs to be replaced, and the cost is high.

The embodiment of the present disclosure proposes a universal communication circuit, and the communication circuit comprises a master interface, at least one slave interface and at least one identification circuit, and the master interface is a flat cable interface which matches the output flat cable interface of the controller, for example, a 10pin flat cable interface. The slave interface is connected to the corresponding functional driver device or the corresponding heating control device, so that the signal of the controller is transmitted to the corresponding device.

The communication circuit is further provided with an identification circuit, which can make the controller identify different flag bits according to the setting states of devices such as a switch or a resistor, for example, in a way that part of the resistor is short-circuited through the switch, or in a way that the resistor is welded or not welded at a specific position.

Specifically, the identification circuit is specifically connected to the first contact point of the master interface with the identification contact point of the slave interface; when the slave interface is connected to the functional driver device or the heating control device, different flag bits are formed through adjusting the setting manners of the resistor, so that the controller determines whether the slave interface is connected to the functional driver device or the heating control device based on the identified driving flag bit or the heating flag bit, thereby achieving the address identification of the communication circuit and improving the universality of the communication circuit.

It can be understood that when the integrated cooker is produced and assembled, the slave interface of the communication circuit can be connected to any kinds of control devices or functional driver devices, and the controller can identify whether the current communication circuit is connected to a control device or a driver device according to identification information by adjusting the level signal of the identification circuit.

In a scenario of replacing the driver device or the control device, after the corresponding device is replaced, the controller can identify the replaced device by adjusting the level signal of the identification circuit, and thus the whole master control board needs not to be replaced, and the integrated cooker has a flexible later upgrade capability.

In the embodiment of the present disclosure, through disposing a universal communication circuit in the control system of the integrated cooker, the communication circuit can make the controller detect different flag bits through adjusting the setting manners of the resistors in the identification circuit, and then adapts to the assembly or replacement of different devices; the strong binding between the devices and the communication circuit is not needed, which reduces the assembly cost and allows free replacement of the control devices in the future, thereby achieving the replacement of the heating manners of an electronic heating, the single-tube heating, or the half-bridge heating, and thus improving the compatibility of the control system.

In any one of the above embodiments, the identification circuit comprises: a first triode, and the emitter of the first triode is connected to the second contact point of the master interface; a first optocoupler, and the first pin of the first optocoupler is connected to the collector of the first triode, and the second pin of the optocoupler is grounded; and a first resistor, connected to the fourth pin of the first optocoupler.

In the embodiment, the communication circuit is provided with the first triode, the first optocoupler and the first resistor. Specifically, the first end of the first resistor is connected to an electrical signal VC, and the second end of the resistor is connected to the pin 4 (i.e., the fourth pin) of the first optocoupler. Meanwhile, the first resistor is connected to the common end of the fourth pin and further connected to a RXD electrical signal.

The emitter E of the first triode is connected to an electrical signal +VCCX, and the emitter of the first triode is connected to the second contact point in the master interface of the communication circuit, and the second contact point is a TXDX contact point, and the collector C of the first triode is connected to the pin 1 (i.e., the first pin) of the first optocoupler.

The pin 3 (i.e., the second pin) of the first optocoupler is grounded (GND), the pin 2 of the first optocoupler is grounded (GNDX) through a resistor.

Through the first triode, the first optocoupler and the first resistor, the RXD signal transmission between the controller and the devices is achieved.

In any one of the above embodiments, the identification circuit further comprises: a second optocoupler, and the first pin of the second optocoupler is connected to the third contact point of the master interface, and the second pin and the third pin of the second optocoupler are grounded; a second triode, and the collector of the second triode is connected to the fourth pin of the second optocoupler; and a second resistor, and the first end of the second resistor is connected to the base electrode of the second triode, and the second end of the second resistor is formed as a signal transceiver of the slave interface.

In the embodiment, the identification circuit is further provided with the second optocoupler, the second triode and the second resistor. Specifically, the collector C of the second triode is connected to the pin 1 (i.e., the fourth pin) of the second optocoupler, the emitter E of the second triode is connected to an electrical signal VCC1, the pin 4 (i.e., the first pin) of the second optocoupler is connected to the third contact point in the master interface of the identification circuit, and the third contact point is a RXDX contact point. The pin 2 (i.e., the second pin) and the pin 3 (i.e., the third pin) of the second optocoupler are grounded.

The first end of the second resistor is connected to a TXD electrical signal, and the second end of the second resistor is connected to the base electrode B of the second triode.

Through the second triode, the second optocoupler and the second resistor, the TXD signal transmission between the controller and the devices is achieved.

In any one of the above embodiments, the identification circuit further comprises: a third resistor, and the first end of the third resistor is connected to the first contact point, and the second end of the third resistor is connected to a grounding contact point of the master interface, and in the case of disposing the third resistor, the controller determines the first heating flag bit after initialization; or a fourth resistor, and the first end of the fourth resistor is connected to the first contact point, the second end of the fourth resistor is connected to a power supply contact point of the master interface, and in the case of disposing the fourth resistor, the controller determines the second heating flag bit after initialization; or a fifth resistor, and the first end of the fifth resistor is connected to the first contact point, and in the case of disposing the fifth resistor, the controller determines the driving flag bit after initialization.

In the embodiment, the control system of the integrated cooker is provided with a fan driving board, the heating control board L, and the heating control board R, respectively corresponding to a flag bit 00, a flag bit 11 and a flag bit 01, and respectively corresponding to a first level signal, a second level signal and a third level signal. In order to distinguish the above three devices, the identification circuit respectively comprises three states, and specifically is disposed with the third resistor, the fourth resistor and the fifth resistor.

Specifically, the signal sequence of the master interface of the communication circuit is GND, +VCC, TXD, RXD and SC, and the SC signal is connected to the first contact point.

In the case of disposing the third resistor, one end of the third resistor is connected to the first contact point SC in the master interface of the communication circuit, the second end of the third resistor is connected to the grounding contact point (GNDX) of the master interface, and for the convenience of distinguishing, "B" is added to the end of the signal identifier of the master interface, i.e., GNDB, +VCCB, TXDB, RXDB and SCB.

At the moment, the controller first sets the RXDB to be a low level, then the main control chip of the heating control device L reads an SCB level, then the main control chip of the heating control device L sets the RXDB to be a high level, and then, the main control chip of the heating control device L reads the SCB level again, and the controller acquires a flag bit00 through the SCB.

In the case of disposing the fourth resistor, the first end of the fourth resistor is connected to the first contact point SC in the master interface of the communication circuit, the second end of the fourth resistor is connected to a +VCCX signal, i.e., a first signal. For the convenience of distinguishing, "A" is added to the end of the signal identifier of the master interface, i.e., GNDA, +VCCA, TXDA, RXDA and SCA.

At the moment, the main control chip of the heating control device R first sets the RXDA to be a low level, the main control chip of the heating control device R reads an SCA level, then the main control chip of the heating control device R sets the RXDA to be a high level, at this moment, the main control chip of the heating control device R reads the SCA level again, and the controller acquires a flag bit 11 through the SCA.

In the case of disposing the fifth resistor, the first end of the fifth resistor is connected to the first contact point SC in the master interface of the communication circuit, and for the convenience of distinguishing, at the moment, "C" is added to the end of the signal identifier of the master interface, i.e., GNDC, +VCCC, TXDC, RXDC and SCC.

At the moment, the main control chip of the driver device first sets the RXDC to be a low level, the main control chip of the driver device reads an SCC level at the moment, then the main control chip of the driver device sets the RXDC to be a high level, at this moment, the main control chip of the driver device reads the SCC level again, and the controller acquires a flag bit 01 through the SCC.

Through adjusting the setting manners of the resistors in the identification circuit in the present disclosure, the controller is enabled to detect different flag bits, and then can adapt to the assembly or replacement of different devices, and the strong binding between the devices and the communication circuit is not needed, which reduces the assembly cost and allows free replacement of control devices in the future, thereby achieving the replacement of the heating manners of the electronic heating, the single-tube heating, or the half-bridge heating, and thus improving the compatibility of the control system.

In the above embodiment, the heating control device is either of a single-tube heating control device and a half-bridge heating control device; the input interface of the heating control device is a standardized input interface adapted to the slave interface, and the output interface of the heating control device is a standardized output interface adapted to the heating device.

In the embodiment, the number of the heating control devices is multiple, and the types of the heating control devices are further multiple. For example, the number of the heating control devices is two, which are respectively the heating control device L and the heating control device R, and the heating control device L can be the single-tube heating control device to adapt to a general low power heating requirement. The heating control device R can be the half-bridge heating control device to adapt to a slightly high power heating requirement; similarly, the heating control device L or the heating control device R can further be a full-bridge heating control device to adapt to a high power heating requirement.

The interface of the heating control device is a standardized interface, and, the input interface of the heating device adapts to the slave interface, the output interface of the heating device adapts to the heating device, and therefore, during the production and assembly, different heating control devices can be disposed freely according to the needs of the products, the devices and the communication circuit need not to be bound forcibly, and the assembly difficulty is reduced, and meanwhile, all kinds of heating devices adopt a unified interface standard, i.e., an interface standard adapted to the slave interface of the communication circuit, which provides a possibility for changing the type of the heating control device in the future, thereby improving the universality and expansibility of the control system of the integrated cooker.

In the above embodiment, the integrated cooker further comprises a power supply device which is connected to the controller, the heating control device and the driver device, and the power supply device comprises a ground line contact point, a zero line contact point and multiple live line contact points.

In the embodiment, the control system of the integrated cooker is provided with the power supply device, and the power supply device is connected to the heating control device, the driver device and the controller, to supply electricity to the controller and each functional device.

Specifically, the power supply device is provided with a power supply interface for connecting a power supply line, and the power supply interface is specifically provided with a ground line contact point PGND, a zero line contact point N and at least one live line contact point L. Taking some embodiments for example, there are three live line contact points which are a contact point L1, a contact point L2 and a contact point L3, respectively.

In the related art, the integrated cookers of different models are arranged with different types of power lines, and there are multiple specifications of the power lines in the market, therefore, when a user needs to replace the power line, the user has to replace the original power line with a power line with the same specification and model, and then the cost of replacing the lines is increased.

For the power supply device proposed by the embodiment of the present disclosure, except the zero line contact point and the ground line contact point, the number of the live line contact points is arranged to be multiple, it is compatible with common power lines in the market, for example, there are three live line contact points, which are the contact point L1, the contact point L2 and the contact point L3, respectively.

When a 2-core power line is connected, the 2-core power line comprises a live line and a zero line, and at the moment, a zero line joint is in contact with a zero line contact point N, a live line joint is in contact with any one of the three live line contact points, for example, in contact with the contact point L1, and then the connection with a power supply can be achieved.

When a 3-core power line is connected, the 3-core power line comprises a live line, a zero line and a ground line, and at the moment, the zero line joint is in contact with the zero line contact point N, a ground line joint is in contact with the ground line contact point PGND, the live line joint is in contact with any one of the three live line contact points, for example, in contact with the contact point L1, and then the connection with a power supply can be achieved.

When a 4-core power line is connected, the 4-core power line comprises a live line 1, a live line 2, a zero line and a ground line, and at the moment, the zero line joint is in contact with the zero line contact point N, the ground line joint is in contact with the ground line contact point PGND, the joint of the live line 1 is in contact with any one of the three live line contact points, for example, in contact with the contact point L1, the joint of the live line 2 is in contact with either of the rest two live line contact points, for example, in contact with the contact point L2, and then the connection with a power supply can be achieved.

When a 5-core power line is connected, the 5-core power line comprises a live line 1, a live line 2, a live line 3, a zero line and a ground line, and at the moment, the zero line joint is in contact with the zero line contact point N, the ground line joint is in contact with the ground line contact point PGND, the joint of the live line 1 is in contact with any one of the three live line contact points, for example, in contact with the contact point L1, the joint of the live line 2 is in contact with either of the rest two live line contact points, for example, in contact with the contact point L2, the joint of the live line 3 is in contact with the rest contact point L3,and then the connection with a power supply can be achieved.

The power supply device of the embodiment of the present application can be adapted to the common power lines in the market, for example, the 2-core power line, the 3-core power line, the 4-core power line and the 5-core power line, and it achieves compatibility with multiple power lines, and thus the universality of the power supply device is improved.

In any one of the above embodiments, the functional driver device and the power supply device are arranged inside the cooker body side-by-side, the heating control device is located among the driver device, the power supply device and the controller, and the functional device is detachably fixed on the bottom of the cooker body; and

the integrated cooker further comprises: a heat dissipating device, provided between the heating control device and the functional driver device, and/or provided between the heating control device and the power supply device, and configured dissipate heat from the heating control device and the functional driver device.

In the embodiment, the driver device and the power supply device are arranged inside the cooker body side-by-side, which can save the internal space of the cooker body and improve the integration level and the heat dissipating efficiency. The heating control device is located at a center position among the driver device, the power supply device and the controller, and disposed corresponding to the heating wire plate, which can reduce the wiring difficulty. The functional device is arranged detachably to help later maintenance, or addition or replacement of the different functional devices.

The heat dissipating device is provided near the heating control device and the functional driver device, and near the heating control device and the power supply device, so that the heat dissipating device can conduct heat dissipation to the heating control device and the functional driver device, and can conduct heat dissipation to the heating control device and the power supply device at the same time, thereby improving the heat dissipating efficiency.

The second aspect of the present disclosure proposes an integrated cooker control method, which is applied to the controller of the integrated cooker, and the integrated cooker comprises a cooker body, a controller, a functional driver device, at least one heating control device, at least one heating device and at least one functional device; and the controller, the functional driver device, the heating control device and the heating device are all provided inside the cooker body; and the integrated cooker control method comprises: if a heating control instruction is detected, analyzing the heating control instruction and sending a heating control signal to the heating control device to control the working state of the heating device; if a driving control instruction is detected, analyzing the driving control instruction and sending a driving control signal to the functional driver device to control the working state of the functional device.

In the embodiment, the integrated cooker comprises the cooker body, the controller, the heating control device and the functional driver device. The integrated cooker further comprises at least one functional device and at least one heating device, and, the heating device can be a heating wire plate, a heating coil etc., the functional device can be a range hood, a steam generator, a barbecue device etc. The controller is configured to receive a heating operation or a functional operation of a user, and after receiving the operation of the user, the controller sends a control instruction to the corresponding heating control device or the functional driver device. Through disposing the heating control device and the driver device inside the cooker body, communication wiring harnesses and power supply wiring harnesses can be decreased, and then the integration level of the electric control assembly of the integrated cooker is improved.

The controller can receive the operation of the user and acquire a corresponding control instruction according to the user's operation. Specifically, a button, a knob etc. can be provided on the controller, when the user presses the button or rotates the knob disposed for heating, the controller detects the heating control instruction; when the user presses the button or rotates the knob disposed for functional driving, the controller detects the driving control instruction.

After the heating control instruction or the driving control instruction is detected, the controller analyzes the instruction and generates the corresponding heating control signal or the driving control signal, and, if it is the heating control instruction, the heating control signal acquired by analysis is sent to the heating control device, to control the heating plate to work. If it is the driving control instruction, the driving control signal acquired by analysis is sent to the functional device, to execute the corresponding function, for example, starting a range hood, a steam device etc.

In the above embodiment, the integrated cooker control method further comprises: if an initialization instruction is detected, determining a heating flag bit corresponding to the heating control device and a driving flag bit corresponding to the functional driver device after the initialization.

In the embodiment, when the integrated cooker is power-up initialized, in the case that the initialization instruction is detected, the controller acquires the flag bit of the connected device through the communication circuit, and the heating control device corresponds to the heating flag bit, and the functional driver device corresponds to the driving flag bit. The controller determines whether the corresponding interface of the communication circuit is connected to the heating control device or the functional driver device based on the corresponding flag bit.

For example, the integrated cooker is provided with a functional device range hood, and the functional driver device specifically is a range hood driving board for driving the range hood to work. The control system of the integrated cooker is provided with a heating control board L, a heating control board R and a range hood driving board.

After the power-up initialization, if the controller determines that the flag bit is a first heating flag bit 00, then it is determined that the interface is connected to the heating control board L; if the controller determines that the flag bit is the second heating flag bit 01, then it is determined that the interface is connected to the heating control board R; if the controller determines that the flag bit is the driving flag bit 11, then it is determined that the interface is connected to the range hood driving board.

In any one of the above embodiments, the integrated cooker comprises the communication circuit, and the communication circuit comprises at least one slave interface, and the slave interface is connected to the heating device and/or the driver device, and the method further comprises:

if it is determined that the identification contact point of the first slave interface in the at least one slave interface corresponds to the heating flag bit, sending the heating control signal to the heating device through the first slave interface in the case that the heating control instruction is detected; if it is determined that the identification contact point of the second slave interface in the at least one slave interface corresponds to the driving flag bit, sending the driving control signal to the driver device through the second slave interface in the case that the driving control instruction is detected.

In the embodiment, the controller determines the slave interface through which the received instruction is sent to the corresponding control board according to the detected flag bit in the power-up initialization process. Specifically, when it is detected that the flag bit returned by the contact point of the first slave interface is the heating flag bit, the heating control signal acquired by analysis is sent to the heating control device through the first slave interface if the heating control instruction is detected. When it is detected that the flag bit returned by the contact point of the second slave interface is the driving flag bit, the driving control signal acquired by analysis is sent to the driver control device through the second slave interface if the driving control instruction is detected.

Through enabling the controller to detect different flag bits, it adapts to the assembly or replacement of different devices; the strong binding between the devices and the communication circuit is not needed, which reduces the assembly cost and allows free replacement of control devices in the future, thereby achieving the replacement of the heating manners of the electronic heating, the single-tube heating, or the half-bridge heating, and thus improving the compatibility of the control system.

The third aspect of the present disclosure proposes an integrated cooker control device, which is applied to the controller of the integrated cooker, and comprises: a cooker body, a controller, a functional driver device, at least one heating control device, at least one heating device and at least one functional device; the controller, the functional driver device, the heating control device and the heating device are all provided inside the cooker body; and the integrated cooker control device comprises:

a first control device, configured to analyze a heating control instruction if the heating control instruction is detected and send a heating control signal to the heating control device to control the working state of the heating device; and a second control device, configured to analyze a driving control instruction if the driving control instruction is detected and send a driving control signal to the functional driver device to control the working state of the functional device.

In the embodiment, the integrated cooker comprises the cooker body, the controller, the heating control device and the functional driver device. The integrated cooker further comprises at least one functional device and at least one heating device, and, the heating device can be a heating wire plate, a heating coil etc., the functional device can be a range hood, a steam generator, a barbecue device etc. The controller is configured to receive a heating operation or a functional operation of a user, and after receiving the operation of the user, the controller sends a control instruction to the corresponding heating control device or the functional driver device. Through disposing the heating control device and the driver device inside the cooker body, communication wiring harnesses and power supply wiring harnesses can be decreased, and the integration level of the electric control assembly of the integrated cooker is improved.

The controller can receive the operation of the user and acquire the corresponding control instruction according to the user's operation. Specifically, a button, a knob etc. can be provided on the controller, when the user presses the button or rotates the knob disposed for heating, the controller detects the heating control instruction; when the user presses the button or rotates the knob disposed for functional driving, the controller detects the driving control instruction.

After the heating control instruction or the driving control instruction is detected, the controller analyzes the instruction and generates the corresponding heating control signal or the driving control signal, and, if it is the heating control instruction, the heating control signal acquired by analysis is sent to the heating control device, to control the heating plate to work. If it is the driving control instruction, the driving control signal acquired analysis is sent to the functional device, to execute the corresponding function, for example, starting a range hood, a steam device etc.

### BRIEF DESCRIPTION OF THE DRAWINGS

Fig. 1 shows a block diagram of the structure of a control system of an integrated cooker according to the embodiments of the present disclosure;
Fig. 2 shows a block diagram of the structure of an integrated cooker according to the embodiments of the present disclosure;
Fig. 3 shows a circuit diagram of a communication circuit according to the embodiments of the present disclosure;
Fig. 4 shows a schematic view of an interface of a microcontroller according to embodiments of the present disclosure;
Fig. 5 shows a schematic view of an interface of a power board of the embodiments of the present disclosure;
Fig. 6 shows a schematic view of the structure of a range hood driving board according to the embodiments of the present disclosure;
Fig. 7 shows a schematic view of an interface of a master control board L according to the embodiments of the present disclosure;
Fig. 8 shows a schematic view of an interface of a master control board R according to the embodiments of the present disclosure;
Fig. 9 shows a flow diagram of an integrated cooker control method according to the embodiments of the present disclosure; and
Fig. 10 shows a block diagram of the structure of an integrated cooker control device according to the embodiments of the present disclosure.

### Reference signs:

102: controller, 104: heating control device, 106: functional driver device, 108: power supply device, 110: heat dissipating device; 200: communication circuit, 202: master interface, 204: slave interface, 206: identification circuit; 2002: first triode, 2004: first optocoupler, 2006: first resistor, 2008: first capacitance; 2010: sixth resistor, 2012: seventh resistor, 2014: eighth resistor, 2016: second optocoupler, 2018: second triode, 2020: second resistor, 2022: ninth resistor, 2024: tenth resistor, 2026: eleventh resistor, 2028: twelfth resistor, 2030: second capacitance, 2032: third resistor, 2034: fourth resistor, and 2036: fifth resistor.

### DETAILED DESCRIPTION OF THE DISCLOSURE

The embodiments of the present disclosure will be further described below in combination with the accompanying drawings and specific embodiments. It should be noted that the embodiments of the present disclosure and the features in the embodiments can be combined with each other if there is no conflict.

In the following description, numerous specific details are set forth in order to provide a thorough understanding of the embodiments of the present disclosure. However, the embodiments of the present disclosure can further be implemented in other manners than those described herein. Therefore, the protection scope of the embodiments of the present disclosure is not limited to the specific embodiments disclosed below.

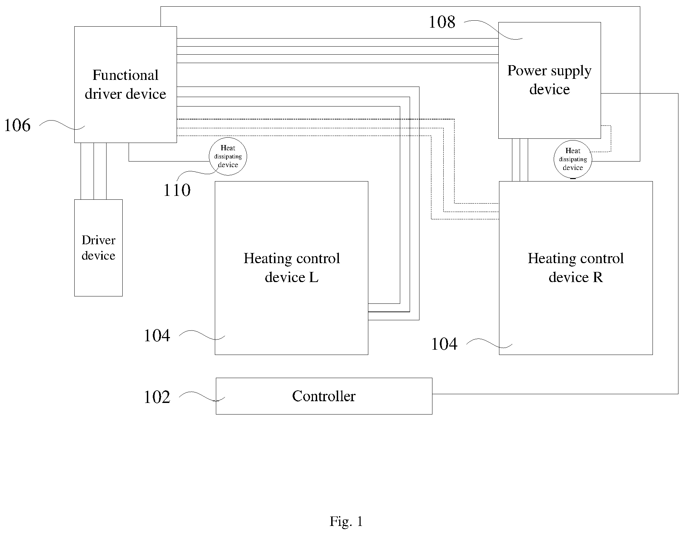

An integrated cooker, an integrated cooker control method and an integrated cooker control system proposed by some embodiments of the present disclosure are described below with reference to Fig. 1 to Fig. 10.

Some embodiments of the present disclosure propose an integrated cooker; Fig. 1 shows a block diagram of the structure of a control system of an integrated cooker according to the embodiments of the present disclosure, and as shown in Fig. 1, the control system comprises:

a cooker body, a controller 102, a functional driver device 106, at least one heating control device 104, at least one heating device and at least one functional device; and the controller 102, the functional driver device 106, the heating control device 104 and the heating device are all provided inside the cooker body; the heating control device 104 is configured to receive a heating control signal sent by the controller 102 to control the working state of the heating device; and the functional driver device 106 is configured to receive a driving control signal sent from the controller 102 to control the working state of the functional device.

In the embodiment of the present disclosure, the integrated cooker comprises the cooker body, the controller 102, the heating control device 104 and the functional driver device 106. The integrated cooker further comprises at least one functional device and at least one heating device, and the heating device can be a heating wire plate, a heating coil etc., and the functional device can be a range hood, a steam generator, a barbecue device etc. The controller 102 is configured to receive a heating operation or a functional operation of a user, and after receiving the operation of the user, the controller 102 sends a control instruction to the corresponding heating control device 104 or the functional driver device 106.

Through disposing the heating control device 104 and the functional driver device 106 inside the cooker body, communication wiring harnesses and power supply wiring harnesses can be decreased, and then the integration level of the electric control assembly of the integrated cooker is improved.

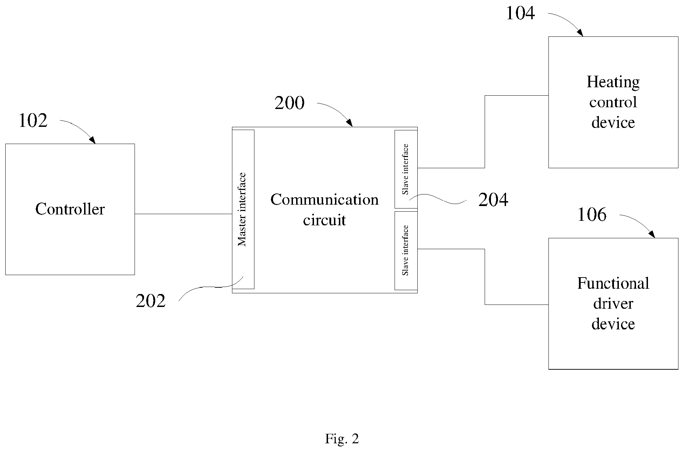

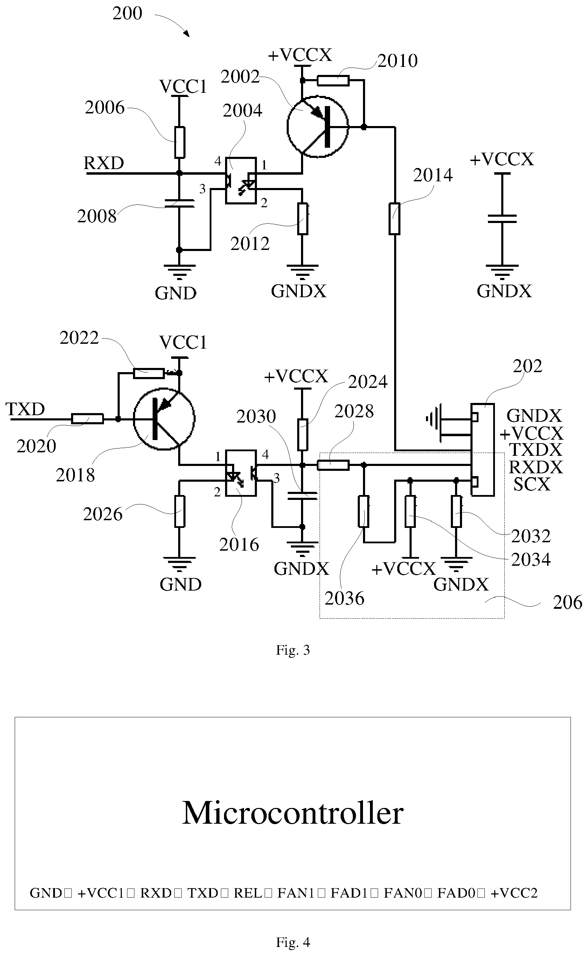

On the basis of the above embodiment, Fig. 2 shows a block diagram of the structure of an integrated cooker according to the embodiments of the present disclosure; Fig. 3 shows a circuit diagram of a communication circuit according to the embodiments of the present disclosure; and as shown in Fig. 2 and Fig. 3,the integrated cooker further comprises a communication circuit 200, and the controller 102 is respectively connected to the heating control device 104 and the functional driver device 106 through the communication circuit 200, to determine the heating flag bit corresponding to the heating control device 104 and the driving flag bit corresponding to the functional driver device 106 after the initialization when an initialization instruction is detected.

In the embodiment of the present disclosure, the controller 102 is configured to receive the heating operation or the functional operation of the user, and after receiving the operation of the user, the controller 102 sends the control signal to the corresponding heating control device 104 or the functional driver device 106 through the communication circuit 200.

The communication circuit 200 is configured to connect the controller 102 with the corresponding heating control device 104 and the corresponding functional driver device 106. When the integrated cooker is power-up initialized, in the case that the initialization instruction is detected, the controller 102 acquires the flag bit of the connected device through the communication circuit 200, and the heating control device104 corresponds to the heating flag bit, and the functional driver device 106 corresponds to the driving flag bit. The controller 102 determines whether the corresponding interface of the communication circuit 200 is connected to the heating control device 104 or the functional driver device 106 based on the corresponding flag bit.

For example, the integrated cooker is provided with a functional device range hood, and the functional driver device 106 specifically is a range hood driving board for driving the range hood to work. The control system of the integrated cooker is provided with a heating control board L, a heating control board R and a range hood driving board.

After the power-up initialization, if the controller 102 determines that the flag bit is a first heating flag bit 00, then it is determined that the interface is connected to the heating control board L; if the controller 102 determines that the flag bit is a second heating flag bit 01, then it is determined that the interface is connected to the heating control board R; if the controller 102 determines that the flag bit is a driving flag bit 11, then it is determined that the interface is connected to the range hood driving board.

On the basis of any one of the above embodiments, the communication circuit 200 comprises: a master interface 202, connected to the controller 102, configured to receive the heating control signal and/or the driving control signal; at least one slave interface 204, connected to the heating control device 104 and/or the functional driver device 106, configured to send the heating control signal and/or the driving control signal; and at least one identification circuit 206, configured to connect the first contact point of the master interface 202 and the identification contact points of the slave interfaces 204, and each identification contact point corresponds to a driving flag bit or a heating flag bit after initialization.

In the embodiment of the present disclosure, the devices in the control system of the integrated cooker can be integrated on one master control board, or disposed separately. And, the controller 102 is a micro master control unit of the integrated cooker, and the controller 102 can send corresponding signals to the functional driver device 106 and the heating control device 104 according to the operation of a user on a control panel, and then controls the heating wire plate to work to heat the cookware through the heating control device 104, and controls the range hood to work to discharge oil fume through a driver device.

The signal communication between the controller 102 and the functional driver device106 and the signal communication between the controller 102 and the heating control device 104 are achieved by the communication circuit 200. Since the signal types of the driver device and the heating control device 104 are different, and the heating control device104 comprises a control device in a single-tube heating manner and a control device in a half-bridge heating manner, the types of these control devices are different.

In the prior art, in order to ensure that the controller 102 can identify the devices accurately, independent and different communication connecting circuits need to be designed for different devices, i.e., independent communication connecting circuits need to be designed for the heating control devices 104 of different heating manners and the driver device. Therefore, during the production and assembly, it is necessary to ensure that the control device and the driver device correspond to the communication connecting circuits one by one, and thus the assembly cost is high.

During the use of the product, different heating wire plates or fan motors need to be replaced, which results in that the control device and the driver device cannot be replaced independently when they need to be replaced, and the communication connecting circuits need to be replaced at the same time, while the communication connecting circuits are generally integrated on the master control board, and as a result, the whole master control board needs to be replaced, and the cost is high.

The embodiment of the present disclosure proposes a universal communication circuit 200, and the communication circuit 200 comprises a master interface 202, at least one slave interface 204 and at least one identification circuit 206, and the master interface 202 is a flat cable interface which matches the output flat cable interface of the controller 102, for example, 10pin flat cable interface. The slave interface 204 is connected to the corresponding functional driver device 106 or the corresponding heating control device 104, so that the signal of the controller 102 is transmitted to the corresponding device.

The communication circuit 200 is further provided with an identification circuit 206, which can make the controller 102 identify different flag bits according to the setting states of devices such as a switch or a resistor, for example, in a way that part of the resistor is short-circuited through the switch, or in a way that the resistor is welded or not welded at a specific position.

Specifically, the identification circuit 206 is specifically connected to the first contact point of the master interface 202 and the identification contact point of the slave interface 204; when the slave interface 204 is connected to the functional driver device 106 or the heating control device 104, different flag bits are formed through adjusting the setting manners of the resistor, so that the controller 102 determines whether the slave interface 204 is connected to the functional driver device 106 or the heating control device 104 based on the identified driving flag bit or the heating flag bit, thereby achieving the address identification of the communication circuit 200 and improving the universality of the communication circuit 200.

It can be understood that when the integrated cooker is produced and assembled, the slave interface 204 of the communication circuit 200 can be connected to any kinds of control devices or functional driver devices 106, and the controller 102 identifies whether the current communication circuit 200 is connected to a control device or a driver device according to identification information by adjusting the level signal of the identification circuit 206.

In a scenario of replacing the driver device or the control device, after the corresponding device is replaced, the controller 102 can identify the replaced device by adjusting the level signal of the identification circuit 206, and thus the whole master control board needs not to be replaced, and the integrated cooker has a flexible later upgrade capability.

In the embodiments of the present disclosure, through disposing a universal communication circuit 200 in the control system of the integrated cooker, the communication circuit 200 can make the controller 102 detect different flag bits through adjusting the setting manners of the resistors in the identification circuit 206, and then adapts to the assembly or replacement of different devices; the strong binding between the devices and the communication circuit 200 is not needed, which reduces the assembly cost and allows the free replacement of the control devices in the future, thereby achieving the replacement of the heating manners of an electronic heating, the single-tube heating, or the half-bridge heating, and thus improving the compatibility of the control system.

On the basis of any one of the above embodiments, the identification circuit 206 comprises: a first triode 2002, and the emitter of the first triode 2002 is connected to the second contact point of the master interface 202; a first optocoupler 2004, and the first pin of the first optocoupler 2004 is connected to the collector of the first triode 2002, and the second pin of the optocoupler 2004 is grounded; and a first resistor 2006, connected to the fourth pin of the first optocoupler 2004.

In the embodiment of the present disclosure, the communication circuit 200 is provided with the first triode 2002, the first optocoupler 2004 and the first resistor 2006. Specifically, the first end of the first resistor 2006 is connected to an electrical signal VC, and the second end of the resistor is connected to the pin 4 (i.e., the fourth pin) of the first optocoupler 2004. Meanwhile, the first resistor 2006 is connected to the common end of the fourth pin and further connected to a RXD electrical signal.

The emitter E of the first triode 2002 is connected to an electrical signal +VCCX, and the emitter of the first triode 2002 is connected to the second contact point in the master interface 202 of the communication circuit 200, and the second contact point is a TXDX contact point, and the collector C of the first triode 2002 is connected to the pin 1 (i.e., the first pin) of the first optocoupler 2004.

The pin 3 (i.e., the second pin) of the first optocoupler 2004 is grounded (GND), the second pin 2 of the first optocoupler 2004 is grounded (GNDX) through a resistor.

Through the first triode 2002, the first optocoupler 2004 and the first resistor 2006, the RXD signal transmission between the controller 102 and the devices is achieved.

On the basis of any one of the above embodiments, the communication circuit 200 further comprises: a second optocoupler 2016, and the first pin of the second optocoupler 2016 is connected to the third contact point of the master interface 202, and the second pin and the third pin of the second optocoupler 2016 are grounded; a second triode 2018, and the collector of the second triode 2018 is connected to the fourth pin of the second optocoupler 2016; and a second resistor 2020, and the first end of the second resistor 2020 is connected to the base electrode of the second triode 2018, and the second end of the second resistor 2020 is formed as a signal transceiver of the slave interface 204.

In the embodiment of the present disclosure, the communication circuit 200 is further provided with the second optocoupler 2016, the second triode 2018 and the second resistor 2020. Specifically, the collector C of the second triode 2018 is connected to the pin 1 (i.e., the fourth pin) of the second optocoupler 2016, the emitter E of the second triode 2018 is connected to an electrical signal VCC1, the pin 4 (i.e., the first pin) of the second optocoupler 2016 is connected to the third contact point in the master interface 202 of the communication circuit 200, and the third contact point is a RXDX contact point. The pin 2 (i.e., the second pin) and the pin 3 (i.e., the third pin) of the second optocoupler 2016 are grounded.

The first end of the second resistor 2020 is connected to a TXD electrical signal, and the second end of the second resistor 2020 is connected to the base electrode B of the second triode 2018.

Through the second triode 2018, the second optocoupler 2016 and the second resistor 2020, the TXD signal transmission between the controller 102 and the devices is achieved.

In any one of the above embodiments, the identification circuit 206 further comprises: a third resistor 2032, and the first end of the third resistor 2032 is connected to the first contact point, and the second end of the third resistor 2032 is connected to a grounding contact point of the master interface 202, and in the case of disposing the third resistor 2032, the controller 102 determines the initialized first heating flag bit; or a fourth resistor 2034, and the first end of the fourth resistor 2034 is connected to the first contact point, the second end of the fourth resistor 2034 is connected to a power supply contact point of the master interface 202, and in the case of disposing the fourth resistor 2034, the controller 102 determines the initialized second heating flag bit; or a fifth resistor 2036, and the first end of the fifth resistor 2036 is connected to the first contact point, the second end of the fifth resistor 2036 is connected to the second end of a ninth resistor 2022, and in the case of disposing the fifth resistor 2036, the controller 102 determines the initialized driving flag bit.

In the embodiment, the control system of the integrated cooker is provided with a fan driving board, the heating control board L, and the heating control board R, respectively corresponding to a flag bit 00, a flag bit 11 and a flag bit 01, and respectively corresponding to a first level signal, a second level signal and a third level signal. In order to distinguish the above three devices, the identification circuit 206 respectively comprises three states, and specifically is disposed with the third resistor 2032, the fourth resistor 2034 and the fifth resistor 2036.

Specifically, the signal sequence of the master interface 202 of the communication circuit 200 is GND, +VCC, TXD, RXD and SC, and the SC signal is connected to the first contact point.

And, in the case of disposing the third resistor 2032, one end of the third resistor 2032 is connected to the first contact point SC in the master interface 202 of the communication circuit 200, the second end of the third resistor 2032 is connected to the grounding contact point (GNDX) of the master interface 202, and for the convenience of distinguishing, "B" is added to the end of the signal identifier of the master interface 202, i.e., GNDB, +VCCB, TXDB, RXDB and SCB.

At the moment, the controller 102 first sets the RXDB to be a low level, then the main control chip of the heating control device L reads an SCB level, then the main control chip of the heating control device L sets the RXDB to be a high level, and then, the main control chip of the heating control device L reads the SCB level again, and the controller 102 acquires a flag bit 00 through the SCB.

In the case of disposing the fourth resistor 2034, the first end of the fourth resistor 2034 is connected to the first contact point SC in the master interface 202 of the communication circuit 200, the second end of the fourth resistor 2034 is connected to a +VCCX signal, i.e., a first signal. For the convenience of distinguishing, "A" is added to the end of the signal identifier of the master interface 202, i.e., GNDA, +VCCA, TXDA, RXDA, SCA.

At the moment, the main control chip of the heating control device R first sets the RXDA to be a low level, the main control chip of the heating control device R reads an SCA level, then the main control chip of the heating control device R sets the RXDA to be a high level, at this moment, the main control chip of the heating control device R reads the SCA level again, and the controller acquires a flag bit 11 through the SCA.

In the case of disposing the fifth resistor 2036, the first end of the fifth resistor 2036 is connected to the first contact point SC in the master interface 202 of the communication circuit 200, the second end of the fifth resistor 2036 is connected to the second end of the ninth resistor 2022, and for the convenience of distinguishing, at the moment, "C" is added to the end of the signal identifier of the master interface 202, i.e., GNDC, +VCCC, TXDC, RXDC, SCC.

At the moment, the main control chip of the functional driver device 106first sets the RXDC to be a low level, the main control chip of the functional driver device 106 reads an SCC level at the moment, then the main control chip of the functional driver device 106 sets the RXDC to be a high level, at this moment, the main control chip of the functional driver device 106 reads the SCC level again, and the controller 102 acquires a flag bit 01 through the SCC.

Through adjusting the setting manners of the resistors in the identification circuit 206 in the present disclosure, the controller 102 is enabled to detect different flag bits, and then can adapt to the assembly or replacement of different devices, and the strong binding between the devices and the communication circuit 200 is not needed, which reduces the assembly cost and allows free replacement of control devices in the future, thereby achieving the replacement of the heating manners of the electronic heating, the single-tube heating, or the half-bridge heating, and thus improving the compatibility of the control system.

In the above embodiment, the heating control device 104 is either of a single-tube heating control device 104 and a half-bridge heating control device 104; the input interface of the heating control device 104 is a standardized input interface adapted to the slave interface 204, and the output interface of the heating control device 104 is a standardized output interface adapted to the heating device.

In the embodiment, the number of the heating control devices 104 is multiple, and the types of the heating control devices 104 are further multiple. For example, the number of the heating control devices 104 is two, which are respectively the heating control device L and the heating control device R, and the heating control device L can be the single-tube heating control device 104 to adapt to a general low power heating requirement. The heating control device R can be the half-bridge heating control device 104 to adapt to a slightly high power heating requirement; similarly, the heating control device L or the heating control device R can further be a full-bridge heating control device 104 to adapt to a high power heating requirement.

The interface of the heating control device 104 is a standardized interface, and, the input interface of the heating device adapts to the slave interface 204, the output interface of the heating device adapts to the heating device, and therefore, during the production and assembly, different heating control devices 104 can be disposed freely according to the needs of the products, the devices and the communication circuit 200 need not to be bound forcibly, and the assembly difficulty is reduced, and meanwhile, all kinds of heating devices adopt a unified interface standard, i.e., an interface standard adapted to the slave interface 204 of the communication circuit 200, which provides a possibility for changing the type of the heating control device 104 in the future, thereby improving the universality and expansibility of the control system of the integrated cooker.

On the basis of any one of the above embodiments, the communication circuit 200 further comprises: a first capacitance 2008, and the first end of the first capacitance 2008 is connected to the first resistor 2006, and the second end of the first capacitance 2008 is grounded; a sixth resistor 2010, which is connected in parallel between the base electrode and the emitter of the first triode 2002; and a seventh resistor 2012, and the first end of the seventh resistor 2012 is connected to the second pin of the first optocoupler 2004, and the second end of the seventh resistor 2012 is connected to the grounding contact point of the master interface.

In the embodiment of the present disclosure, the communication circuit 200 further comprises the first capacitance 2008, the sixth resistor 2010 and the seventh resistor 2012. Specifically, the first end of the first capacitance 2008 is connected to the second end of the first resistor 2006and the signal RXD, and the second end of the first capacitance 2008 is connected to the pin 3 (i.e., the third pin) of the first optocoupler 2004 and is grounded (GND).

The first end of the sixth resistor 2010 is connected to the emitter E of the first triode 2002, the second end of the sixth resistor 2010 is connected to the base electrode B of the first triode 2002. The first end of the seventh resistor 2012 is connected to the pin 2 (i.e., the second pin) of the firs optocoupler 2004, and the second end of the seventh resistor 2012 is grounded.

Through disposing the first capacitance 2008, the sixth resistor 2010 and the seventh resistor 2012, the signal clutter in the communication circuit 200 can be filtered, and thus the reliability and safety of the communication circuit 200 are improved.

On the basis of any one of the above embodiments, the communication circuit 200 further comprises an eighth resistor 2014, which is connected in series between the base electrode of the first triode 2002 and the second contact point.

In the embodiments of the present disclosure, the communication circuit 200 is further provided with the eighth resistor 2014, the first end of the eighth resistor 2014 is connected to the base electrode B of the first triode 2002, the second end of the eighth resistor 2014 is connected to the second contact point in the master interface 202 of the communication circuit 200, i.e., connected in series between the first triode 2002 and the contact point of the master interface 202, thereby protecting the first triode 2002 and improving the reliability of the communication circuit 200.

On the basis of any one of the above embodiments, the communication circuit 200 further comprises: a ninth resistor 2022, which is connected in series between the emitter and the base electrode of the second triode 2018; a tenth resistor 2024, and the first end of the tenth resistor 2024 is connected to the first pin of the second optocoupler 2016, and the second end of the tenth resistor 2024 is connected to the power supply contact point of the master interface; an eleventh resistor 2026, and the first end of the eleventh resistor 2026 is connected to the third pin of the second optocoupler 2016, and the second end of the eleventh resistor 2026 is grounded.

In the embodiments of the present application, the communication circuit 200 further comprises the ninth resistor 2022, the tenth resistor 2024 and the eleventh resistor 2026. Specifically, the first end of the ninth resistor 2022 is connected to the emitter E of the second triode 2018 and the electrical signal VCC1, and the second end of the ninth resistor 2022 is connected to the base electrode B of the second triode 2018.

The first end of the tenth resistor 2024 is connected to the pin 4 (i.e., the first pin) of the second optocoupler 2016, and the second end of the tenth resistor 2024 is connected to the electrical signal +VCCX. The first end of the eleventh resistor 2026 is connected to the pin 2 (i.e., the second pin) of the second optocoupler 2016, and the second end of the eleventh resistor 2016 is grounded.

Through disposing the ninth resistor 2022, the tenth resistor 2024 and the eleventh resistor 2026, the second triode 2018 and the second optocoupler 2016 can be protected effectively, thereby improving the reliability of the communication circuit 200.

On the basis of any one of the above embodiments, the communication circuit 200 further comprises: a twelfth resistor 2028, and the first end of the twelfth resistor 2028 is connected to the first pin of the second optocoupler 2016, and the second end of the twelfth resistor 2028 is connected to the third contact point; and a second capacitance 2030, and the first end of the second capacitance 2030 is connected to the first end of the twelfth resistor 2028, and the second end of the second capacitance 2030 is connected to the grounding contact point of the master interface.

In the embodiment of the present disclosure, the communication circuit 200 is further provided with the twelfth resistor 2028 and the second capacitance 2030. The first end of the twelfth resistor 2028 is connected to the pin 4 (i.e., the first pin) of the second optocoupler 2016, and the second end of the twelfth resistor 2028 is connected to the third contact point (RXDX contact point) in the master interface 202 of the communication circuit 200, i.e., connected in series between the second optocoupler 2016 and the contact point of the master interface 202, thereby protecting the second optocoupler 2016 and improving the reliability of the communication circuit 200.

The first end of the second capacitance 2030 is connected to the pin 4 (i.e., the first pin) of the second optocoupler 2016 and the common end of the twelfth resistor 2028, and the second end of the second capacitance 2030 and the pin 3 (i.e., the third pin) of the second optocoupler 2016 are grounded together, the clutter of the second optocoupler 2016 can be filtered through the second capacitance 2030, thereby improving the signal purity of the communication circuit 200.

On the basis of any one of the above embodiments, the control system further comprises: a power supply device 108 which is connected to the controller 102, the heating control device 104 and the functional driver device 106, and the power supply device 108 comprises a ground line contact point, a zero line contact point and multiple live line contact points.

In the embodiment of the present disclosure, the control system of the integrated cooker is provided with the power supply device 108, and the power supply device 108 is connected to the heating control device 104, the functional driver device 106 and the controller 102, to supply electricity to the controller 102 and each functional device.

Specifically, the power supply device 108 is provided with a power supply interface for connecting a power supply line, and the power supply interface is specifically provided with a ground line contact point PGND, a zero line contact point N and at least one live line contact point L. Taking some embodiments for example, there are three live line contact points which are a contact point L1, a contact point L2 and a contact point L3, respectively.

In the related art, the integrated cookers of different models are arranged with different types of power lines, and there are multiple specifications of the power lines in the market, therefore, when a user needs to replace the power line, the user has to replace the original power line with a power line with the same specification and model, and then the cost of replacing the lines is increased.

For the power supply device 108 proposed by the embodiment of the present disclosure, except the zero line contact point and the ground line contact point, the number of the live line contact points is arranged to be multiple, it is compatible with common power lines in the market, for example, there are three live line contact points, which are the contact point L1, the contact point L2 and the contact point L3, respectively.

When a 2-core power line is connected, the 2-core power line comprises a live line and a zero line, and at the moment, a zero line joint is in contact with a zero line contact point N, a live line joint is in contact with any one of the three live line contact points, for example, in contact with the contact point L1, and then the connection with a power supply can be achieved.

When a 3-core power line is connected, the 3-core power line comprises a live line, a zero line and a ground line, and at the moment, the zero line joint is in contact with the zero line contact point N, a ground line joint is in contact with the ground line contact point PGND, the live line joint is in contact with any one of the three live line contact points, for example, in contact with the contact point L1,and then the connection with a power supply can be achieved.

When a 4-core power line is connected, the 4-core power line comprises a live line 1, a live line 2, a zero line and a ground line, and at the moment, the zero line joint is in contact with the zero line contact point N, the ground line joint is in contact with the ground line contact point PGND, the joint of the live line 1 is in contact with any one of the three live line contacts, for example, in contact with the contact point L1, the joint of the live line 2 is in contact with either of the rest two live line contact points, for example, in contact with the contact point L2, and then the connection with a power supply can be achieved.

When a 5-core power line is connected, the 5-core power line comprises a live line 1, a live line 2, a live line 3, a zero line and a ground line, and at the moment, the zero line joint is in contact with the zero line contact point N, the ground line joint is in contact with the ground line contact point PGND, the joint of the live line 1 is in contact with any one of the three live line contact points, for example, in contact with the contact point L1, the joint of the live line 2 is in contact with either of the rest two live line contact points, for example, in contact with the contact point L2, the joint of the live line 3 is in contact with the rest contact point L3, and then the connection with a power supply can be achieved.

The power supply device 108 of the embodiment of the present application can be adapted to the common power lines in the market, for example, the 2-core power line, the 3-core power line, the 4-core power line and the 5-core power line, and it achieves compatibility with multiple power lines, and thus the universality of the power supply device 108 is improved.

On the basis of any one of the above embodiments, the functional driver device 106 and the power supply device 108 are arranged inside the cooker body side-by-side, the heating control device 104 is located among the driver device, the power supply device 108 and the controller 102, and the functional device is detachably fixed on the bottom of the cooker body; and

the integrated cooker further comprises: a heat dissipating device 110, provided between the heating control device 104 and the functional driver device 106, and/or provided between the heating control device 104 and the power supply device 108, and configured to dissipate heat from the heating control device 104 and the functional driver device 106.

In the embodiment of the present disclosure, the driver device and the power supply device 108 are arranged inside the cooker body side-by-side, which can save the internal space of the cooker body and improve the integration level and the heat dissipating efficiency. The heating control device 104 is located at a center position among the driver device, the power supply device108 and the controller 102, and disposed corresponding to the heating wire plate, which can reduce the wiring difficulty. The functional device is arranged detachably to help later maintenance, or addition or replacement of the different functional devices.

The heat dissipating device 110 is provided near the heating control device 104 and the functional driver device 106, and near the heating control device 104 and the power supply device 108, so that the heat dissipating device 110 can conduct heat dissipation to the heating control device 104 and the functional driver device 106, and can conduct heat dissipation to the heating control device 104 and the power supply device 108 at the same time, thereby improving the heat dissipating efficiency.

In a specific embodiment of the present disclosure, the control system comprises: a microcontroller (i.e., the above controller), a power board (i.e., the above power supply device), a range hood driving board (i.e., the above driver device), a master control board L and a master control board R (equivalent to the above heating control device).

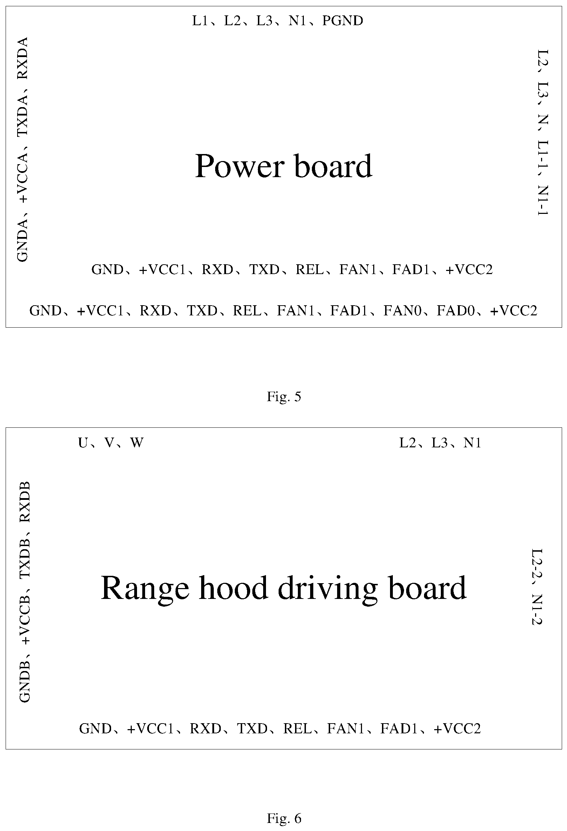

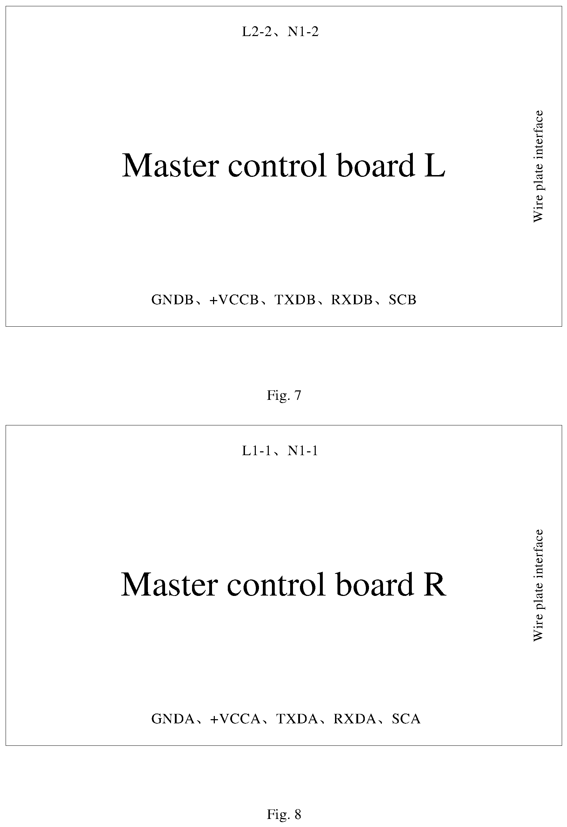

Fig. 4 shows a schematic view of an interface of a microcontroller according to embodiments of the present disclosure; Fig. 5 shows a schematic view of an interface of a power board of the embodiments of the present disclosure; Fig. 6 shows a schematic view of the structure of a range hood driving board according to the embodiments of the present disclosure; Fig. 7 shows a schematic view of an interface of a master control board L according to the embodiments of the present disclosure; and Fig. 8 shows a schematic view of an interface of a master control board R according to the embodiments of the present disclosure.

As shown in Fig. 4, Fig. 5, Fig. 6, Fig. 7 and Fig. 8:

The microcontroller comprises a 10Pin flat cable external interface, and the sequence of the electrical signals of the flat cable is: GND, +VCC1, RXD, TXD, REL, FAN1, FAD1, FAN0, FAD0 and+VCC2.

The power board has a 10Pin flat cable external interface, and the sequence of the electrical signals of the flat cable is: GND, +VCC1, RXD, TXD, REL, FAN1, FAD1, FAN0, FAD0 and+VCC2, and the 10P flat cable external interface is connected to the 10 flat cable external interface with the same sequence of electrical signals of the flat cable of the microcontroller through 10Pin flat cables.

The power board further has an 8Pin flat cable external interface, and the sequence of electrical signals of the flat cable is: GND, +VCC1, RXD, TXD, REL, FAN1, FAD1 and+VCC2.

The power board further has a SPin flat cable external interface, and the sequence of electrical signals of the flat cable is: GNDA, +VCCA, TXDA and RXDA.

The power board further has a SPin power supply main interface, and the sequence of electrical signals of the interface is: L1, L2, L3, N1 and PGND.

The power board further has a SPin power supply output interface, and the sequence of the electrical signals of the interface is: L2, L3, N, L1-1 and N1-1.

The range hood driving board has an SPin flat cable external interface, and the sequence of the electrical signals of the flat cable is: GND, +VCC1, RXD, TXD, REL, FAN1, FAD1 and +VCC2, and the SPin flat cable external interface is connected to the 8 flat cable external interface with the same sequence of the electrical signals of the flat cable of the power board through SPin flat cables.

The range hood driving board further has a SPin flat cable external interface, and the sequence of the electrical signals of the flat cable is: GNDB, +VCCB, TXDB and RXDB.

The range hood driving board further has a 3Pin motor driven interface, and the sequence of the electrical signals of the interface is: U, V and W, and the 3Pin motor driven interface is directly connected to a motor.

The range hood driving board further has a 3Pin power supply main interface, and the sequence of the electrical signals of the interface is: L2, L3 and N1, and the 3Pin power supply main interface is respectively connected to the same electrical signals L2, L3 and N1 in the SPin power supply output interface through single wires.

The range hood driving board further has a 2Pin power supply output interface, and the electrical signals of the interface are: L2-2 and N1-2.

The master control board L has a SPin flat cable external interface, and the sequence of the electrical signals of the flat cable is: GNDB, +VCCB, TXDB and RXDB, and the SPin flat cable external interface is connected to the 5 flat cable external interface with the same sequence of the electrical signals of the flat cable of the range hood driving board through SPin flat cables.

The master control board L further has a2Pin power supply main interface, and the sequence of the electrical signals of the interface is: L2-2 and N1-2, and the 2Pin power supply main interface is respectively connected to the same interface electrical signals L2-2 and N1-2of the range hood driving board through single wires.

The master control board L further has a wire plate interface, and the wire plate interface is directly connected to a heating wire plate.

The master control board R has a SPin flat cable external interface, and the sequence of the electrical signals of the flat cable is: GNDA, +VCCA, TXDA and RXDA, and the SPin flat cable external interface is connected to the 5 flat cable external interface with the same sequence of the electrical signals of the flat cable of the power board through SPin flat cables.

The master control board R has a2Pin power supply main interface, and the sequence of the electrical signals of the interface is: L1-1 and N1-1, and the 2Pin power supply main interface is respectively connected to the same interface electrical signals L1-1 and N1-1 of the power board through single wires.

The master control board R further has a wire plate interface, and the wire plate interface is directly connected to a heating wire plate.

It can be understood that the sequences and the numbers of the above electrical signals can be modified according to a standardized software, and the sequences and the numbers of the above electrical signals are only taken as an example, but do not have any limiting function.

It needs to be reminded that the above connection mode is the solid line connection method in the line connection modes illustrated in the block diagram of the control system as shown in Fig. 1, in actual application, the virtual line connection methods and other connection methods meeting a standardized program can further be achieved in combination with the standardized program. That is, the two power lines and the SPin communication line of the master control board L can all be connected to the power board, at the moment, the two power lines and the SPin communication line of the master control board R are all connected to the range hood driving board; or the two power lines of the master control board L are connected to the power board, while the SPin communication line of the master control L is still connected to the range hood driving board, and at the moment, the two power lines of the master control board R are connected to range hood driving board, and the SPin communication line of the master control board R is still connected to the power board. Two sets of fans can further achieve the connection method of the virtual line B, and one is connected to the range hood driving board, the other is connected to the power board, or both of them are connected to the power board.

For the line connecting modes of a power supply proposed in the embodiments of the present disclosure, whatever the power line is, the power supply main interfaces N of the range hood driving board are connected to N of the power board. When the 2-core power line is used, the power lines are respectively connected to L1 and N of the power board, and at the moment, both of the power supply main interfaces L2 and L3 of the range hood driving board are connected to the L1 of the power board.

When the 3-core power line is used, the power lines are respectively connected to the L1, N and PGND of the power board, and at the moment, both of the power supply main interfaces L2 and L3 of the range hood driving board are connected to the L1 of the power board.

When the 4-core power line is used, the power lines are respectively connected to the L1, L2, N and PGND of the power board, and at the moment, the power supply main interface L2 of the range hood driving board is connected to the L2 of the power board, and the power supply main interface board L3 of the range hood driving board is connected to the L1 of the power board.

When the 5-core power line is used, the power lines are respectively connected to the L1, L2, L3, N and PGND of the power board, and at the moment, the power supply main interface L2 of the range hood driving board is connected to the L2 of the power board, and the power supply main interface board L3 of the range hood driving board is connected to the L3 of the power board.

The replacing method for the single-tube heating and the half-bridge heating is as follow: when a designated sequence of the electrical signals is ensured, by only replacing the master control board L or the master control board R, the replacement of the single-tube heating or the half-bridge heating for the electromagnetic heating can be achieved.

The replacing method for a direct current motor and an alternating current motor is to replace the range hood driving board, and then the replacement of the direct current motor and the alternating current motor of the range hood can be achieved.

The control system proposed by the embodiments of the present disclosure integrates the range hood driving board and the respective functional boards of the cooker body inside the cooker body, and then increases the integration of the allin-one machine of the range hood and the cooker, simplifies assembling, saves costs and improves EMC; in addition, in the case that the range hood device has no circuit board, the structure of the range hood device can be designed and this increases the safety and helps optimize wind speed and duct lines.

The integrated cooker applied with the control system satisfies the standardized program, when the designated sequence of the electrical signals is ensured, by only replacing the master control board L or the master control board R, the replacement of the single-tube heating or the half-bridge heating for the electromagnetic heating can be achieved, and the replacement of the direct current motor or the alternating current motor of the range hood can be achieved by replacing the range hood driving board, and this helps make choice among high, medium and low grades, and helps the construction of platform standardization.

In addition, the electric control layout of the integrated cooker is compatible with multiple power lines, and can ensure the compatibility of the integrated cooker.

On the basis of any one of the above embodiments, the integrated cooker further comprises a heating assembly which is connected to the control system and comprises an air duct, and comprises a range hood assembly which is connected to the control system and is communicated with the air duct.

In the embodiments of the present disclosure, the integrated cooker comprises the heating assembly, and the heating assembly is connected to the heating control device in the control system, thereby heating the cooking appliance, and the heating assembly further comprises the air duct, and the air duct is communicated with the range hood assembly, and the range hood assembly is connected to the driver device of the control system.

The integrated cooker proposed in the present disclosure can extract oil fume from cooking together to the inside of the integrated cooker, accomplish grease filtration and odor filtration in the interior of the integrated cooker, and then exhaust to the indoor environment where the user is located, to achieve an internal recycling of the oil fume, and prevent disposing a complex exhaust structure.

It can be understood that the electric control solution proposed in the embodiment of the present disclosure is compatible with an integrated cooker with an external exhaust system at the same time.

On the basis of any one of the above embodiments, the integrated cooker further comprises a filter, provided in the air duct and/or the range hood assembly.

In the embodiment of the present disclosure, the filter is provided inside the integrated cooker, and configured to filter the oil fume sucked into the integrated cooker, and then to filter out impurities and substances emitting peculiar smells contained in the oil fume, and thereby ensure that the gas discharged back to the room will not pollute the indoor environment.

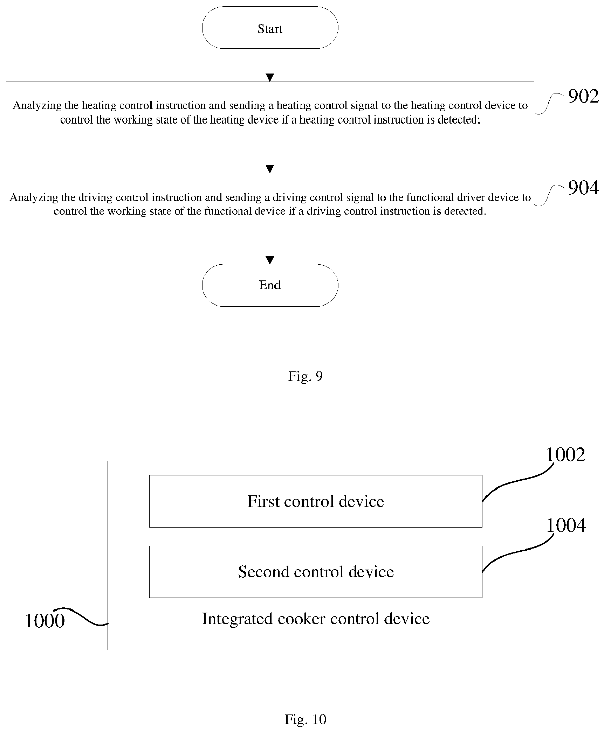

Some embodiments of the present disclosure propose an integrated cooker control method, which is applied to the controller of the integrated cooker, and the integrated cooker comprises a cooker body, a controller, a functional driver device, at least one heating control device, at least one heating device and at least one functional device; and the controller, the functional driver device, the heating control device and the heating device are all provided inside the cooker body; Fig. 9 shows a flow diagram of an integrated cooker control method according to the embodiments of the present disclosure; and as shown in Fig. 9, the integrated cooker control method comprises:
step 902: analyzing the heating control instruction and sending a heating control signal to the heating control device to control the working state of the heating device if a heating control instruction is detected; and
step 904: analyzing the driving control instruction and sending a driving control signal to the functional driver device to control the working state of the functional device if a driving control instruction is detected.

In the embodiments of the present disclosure, the integrated cooker comprises the cooker body, the controller, the heating control device and the functional driver device. The integrated cooker further comprises at least one functional device and at least one heating device, and, the heating device can be a heating wire plate, a heating coil etc., the functional device can be a range hood, a steam generator, a barbecue device etc. The controller is configured to receive a heating operation or a functional operation of a user, and after receiving the operation of the user, the controller sends a control instruction to the corresponding heating control device or the functional driver device. Through disposing the heating control device and the driver device inside the cooker body, communication wiring harnesses and power supply wiring harnesses can be decreased, and the integration level of the electric control assembly of the integrated cooker is improved.

The controller can receive the operation of the user and acquire a corresponding control instruction according to the user's operation. Specifically, a button, a knob etc. can be provided on the controller, when the user presses the button or rotates the knob disposed for heating, the controller detects the heating control instruction; when the user presses the button or rotates the knob disposed for functional driving, the controller detects the driving control instruction.

After the heating control instruction or the driving control instruction is detected, the controller analyzes the instruction and generates the corresponding heating control signal or the driving control signal, and, if it is the heating control instruction, the heating control signal acquired by analysis is sent to the heating control device, to control the heating plate to work. If it is the driving control instruction, the driving control signal acquired by analysis is sent to the functional device, to execute the corresponding function, for example, starting a range hood, starting a steam device etc.

On the basis of the above embodiments, the integrated cooker control method further comprises: if an initialization instruction is detected, determining a heating flag bit corresponding to the heating control device and a driving flag bit corresponding to the functional driver device after the initialization.

In the embodiments of the present disclosure, when the integrated cooker is power-up initialized, in the case that the initialization instruction is detected, the controller acquires the flag bit of the connected device through the communication circuit, and the heating control device corresponds to the heating flag bit, and the functional driver device corresponds to the driving flag bit. The controller determines whether the corresponding interface of the communication circuit is connected to the heating control device or the functional driver device based on the corresponding flag bit.

For example, the integrated cooker is provided with a functional device range hood, and the functional driver device specifically is a range hood driving board for driving the range hood to work. The control system of the integrated cooker is provided with a heating control board L, a heating control board R and a range hood driving board.

After the power-up initialization, if the controller determines that the flag bit is a first heating flag bit 00, then it is determined that the interface is connected to the heating control board L; if the controller determines that the flag bit is the second heating flag bit 01, then it is determined that the interface is connected with the heating control board R; if the controller determines that the flag bit is the driving flag bit 11, then it is determined that the interface is connected to the range hood driving board.

On the basis of the above embodiments, the integrated cooker comprises the communication circuit, and the communication circuit comprises at least one slave interface, and the slave interface is connected to the heating device and/or the driver device, and the method further comprises:

if it is determined that the identification contact point of the first slave interface in the at least one slave interface corresponds to the heating flag bit, sending the heating control signal to the heating device through the first slave interface in the case that the heating control instruction is detected; if it is determined that the identification contact point of the second slave interface in the at least one slave interface corresponds to the driving flag bit, sending the driving control signal to the driver device through the second slave interface in the case that the driving control instruction is detected.

In the embodiments of the present disclosure, the controller determines the slave interface through which the received instruction is sent to the corresponding control board according to the detected flag bit in the power-up initialization process. Specifically, when it is detected that the flag bit returned by the contact point of the first slave interface is the heating flag bit, the heating control signal acquired by analysis is sent to the heating control device through the first slave interface if the heating control instruction is detected. When it is detected that the flag bit returned by the contact point of the second slave interface is the driving flag bit, the driving control signal acquired by analysis is sent to the driver control device through the second slave interface if the driving control instruction is detected.

Through enabling the controller to detect different flag bits, it adapts to the assembly or replacement of different devices; the strong binding between the devices and the communication circuit is not needed, which reduces the assembly cost and allows free replacement of control devices in the future, thereby achieving the replacement of the heating manners of the electronic heating, the single-tube heating, or the half-bridge heating, and thus improving the compatibility of the control system.

Some embodiments of the present disclosure propose an integrated cooker control device, which is applied to the controller of the integrated cooker, and comprises: a cooker body, a controller, a functional driver device, at least one heating control device, at least one heating device and at least one functional device; the controller, the functional driver device, the heating control device and the heating device are all provided inside the cooker body; Fig. 10 shows a block diagram of the structure of an integrated cooker control device according to the embodiments of the present disclosure, and as shown in Fig. 10, the integrated cooker control device 1000 comprises:

a first control device 1002, configured to analyze a heating control instruction if the heating control instruction is detected and send a heating control signal to the heating control device to control the working state of the heating device; and a second control device 1004, configured to analyze a driving control instruction if the driving control instruction is detected and send a driving control signal to the functional driver device to control the working state of the functional device.

In the embodiment, the integrated cooker comprises: the cooker body, the controller, the heating control device and the functional driver device. The integrated cooker further comprises at least one functional device and at least one heating device, and, the heating device can be a heating wire plate, a heating coil etc., the functional device can be a range hood, a steam generator, a barbecue device etc. The controller is configured to receive a heating operation or a functional operation of a user, and after receiving the operation of the user, the controller sends a control instruction to the corresponding heating control device or the functional driver device. Through disposing the heating control device and the driver device inside the cooker body, communication wiring harnesses and power supply wiring harnesses can be decreased, the integration level of the electric control assembly of the integrated cooker is improved.

The controller can receive the operation of the user and acquire the corresponding control instruction according to the user's operation. Specifically, a button, a knob etc. can be provided on the controller, when the user presses the button or rotates the knob disposed for heating, the controller detects the heating control instruction; when the user presses the button or rotates the knob disposed for functional driving, the controller detects the driving control instruction.

After the heating control instruction or the driving control instruction is detected, the controller analyzes the instruction and generates the corresponding heating control signal or the driving control signal, and, if it is the heating control instruction, the heating control signal acquired by analysis is sent to the heating control device, to control the heating plate to work. If it is the driving control instruction, the driving control signal acquired by analysis is sent to the functional device, to execute the corresponding function, for example, starting a range hood, starting a steam device etc.

On the basis of the above embodiments, the integrated cooker control device further comprises: a determining device, configured to determine the heating flag bit corresponding to the heating control device and the driving flag bit corresponding to the functional driver device after initialization if an initialization instruction is detected.

In the embodiment of the present disclosure, when the integrated cooker is power-up initialized, in the case that the initialization instruction is detected, the controller acquires the flag bit of the connected device through the communication circuit, and the heating control device corresponds to the heating flag bit, and the functional driver device corresponds to the driving flag bit. The controller determines whether the corresponding interface of the communication circuit is connected to the heating control device or the functional driver device based on the corresponding flag bit.

For example, the integrated cooker is provided with a functional device range hood, and the functional driver device specifically is a range hood driving board for driving the range hood to work. The control system of the integrated cooker is provided with a heating control board L, a heating control board R and a range hood driving board.

After the power-up initialization, if the controller determines that the flag bit is a first heating flag bit 00, then it is determined that the interface is connected to the heating control board L; if the controller determines that the flag bit is the second heating flag bit 01, then it is determined that the interface is connected to the heating control board R; if the controller determines that the flag bit is the driving flag bit 11, then it is determined that the interface is connected to the range hood driving board.

On the basis of the above embodiments, the integrated cooker comprises the communication circuit, and the communication circuit comprises at least one slave interface, and the slave interface is connected to the heating device and/or the driver device, and the integrated cooker control device further comprises:
a sending device, configured to send the heating control signal to the heating device through the first slave interface in the case that the heating control instruction is detected, if it is determined that the identification contact point of the first slave interface in the at least one slave interface corresponds to the heating flag bit; and send the driving control signal to the driver device through the second slave interface in the case that the driving control instruction is detected, if it is determined that the identification contact point of the second slave interface in the at least one slave interface corresponds to the driving flag bit.

In the embodiment of the present disclosure, the controller determines the slave interface through which the received instruction is sent to the corresponding control board according to the detected flag bit in the power-up initialization process. Specifically, when it is detected that the flag bit returned by the contact point of the first slave interface is the heating flag bit, the heating control signal acquired by analysis is sent to the heating control device through the first slave interface if the heating control instruction is detected. When the it is detected that flag bit returned by the contact point of the second slave interface is the driving flag bit, the driving control signal acquired by analysis is sent to the driver control device through the second slave interface if the driving control instruction is detected.

Through enabling the controller to detect different flag bits, it adapts to the assembly or replacement of different devices; the strong binding between the devices and the communication circuit is not needed, which reduces the assembly cost and allows free replacement of control devices in the future, thereby achieving the replacement of the heating manners of the electronic heating, the single-tube heating, or the half-bridge heating, and thus improving the compatibility of the control system.

In the description of the present disclosure, the term of "multiple" indicates two or more, unless otherwise explicitly specified or defined. The orientation or position relations indicated by the terms of "upper", "lower", and the like are based on the orientation or position relations shown in the accompanying drawings, and they are just intended to conveniently describe the present disclosure and simplify the description, and are not intended to indicate or imply that the devices or units as indicated should have specific orientations or should be configured or operated in specific orientations, and then should not be construed as limitations to the present application; the terms "connection", "mounting", "fixing" and the like should be understood in a broad sense, for example, the term "connection" may be a fixed connection, and may further be a removable connection, or an integral connection; and it may be a direct connection and may further be an indirect connection through an intermediary. A person of ordinary skills in the art could understand the specific meanings of the terms in the present disclosure according to specific situations.

In the description of the present specification, the descriptions of the terms "one embodiment", "some embodiments" and "specific embodiments" and the like mean that specific features, structures, materials or characteristics described in combination with the embodiment(s) or example(s) are included in at least one embodiment or example of the present disclosure. In the specification, the schematic representation of the above terms does not necessarily refer to the same embodiment or example. Moreover, the particular features, structures, materials or characteristics described may be combined in a suitable manner in any one or more embodiments or examples.

## Claims

1. An integrated cooker, comprising: a cooker body, a controller (102), a functional driver device (106), at least one heating control device (104), at least one heating device and at least one functional device; wherein the controller (102), the functional driver device (106), the heating control device (104) and the heating device are all provided inside the cooker body; the heating control device (104) is configured to receive a heating control signal sent by the controller (102) to control the working state of the heating device; and the functional driver device (106) is configured to receive a driving control signal sent by the controller (102) to control the working state of the functional device.

2. The integrated cooker according to claim 1, further comprising a communication circuit (200), wherein, the controller (102) is respectively connected to the heating control device (104) and the functional driver device (106) through the communication circuit (200), to determine a heating flag bit corresponding to the heating control device (104) and a driving flag bit corresponding to the functional driver device (106) after the initialization when an initialization instruction is detected.

3. The integrated cooker according to claim 2, wherein the communication circuit (200) further comprises: a master interface (202) that is connected to the controller (102), and configured to receive the heating control signal and/or the driving control signal; at least one slave interface (204) that is connected to the heating control device (104) and/or the functional driver device (106), and configured to send the heating control signal and/or the driving control signal; and at least one identification circuit (206), configured to connect the first contact point of the master interface (202) with the identification contact points of the slave interfaces (204), wherein each identification contact point corresponds to a driving flag bit or a heating flag bit after initialization.

4. The integrated cooker according to claim 3, wherein the identification circuit (206) comprises: a first triode (2002), the emitter of which is connected to the second contact point of the master interface (202); a first optocoupler (2004), the first pin of which is connected to the collector of the first triode (2002), and the second pin of the optocoupler is grounded; and a first resistor (2006) that is connected to the fourth pin of the first optocoupler (2004).

5. The integrated cooker according to claim 3, wherein the identification circuit (206) further comprises: a second optocoupler (2016), the first pin of which is connected to the third contact point of the master interface (202), and the second pin and the third pin of the second optocoupler (2016) are grounded; a second triode (2018), the collector of which is connected to the fourth pin of the second optocoupler (2016); and a second resistor (2020), the first end of which is connected to the base electrode of the triode, and the second end of which forms a signal transceiver of the slave interface (204).

6. The integrated cooker according to claim 3, wherein the identification circuit (206) further comprises: a third resistor (2032), the first end of which is connected to the first contact point, and the second end of which is connected to a grounding contact point of the master interface (202), and in the case of disposing the third resistor (2032), the controller (102) determines a first heating flag bit after initialization; or a fourth resistor (2034), the first end of which is connected to the first contact point, the second end of which is connected to a power supply contact point of the master interface (202), and in the case of disposing the fourth resistor (2034), the controller (102) determines a second heating flag bit after initialization; or a fifth resistor (2036), the first end of which is connected to the first contact point, and in the case of disposing the fifth resistor (2036), the controller (102) determines the driving flag bit after initialization.

7. The integrated cooker according to claim 3, wherein the heating control device (104) is either of a single-tube heating control device and a half-bridge heating control device; and the input interface of the heating control device (104) is a standardized input interface adapted to the slave interface (204), and the output interface of the heating control device (104) is a standardized output interface adapted to the heating device.

8. The integrated cooker according to claim 4, further comprising: a power supply device (108), connected to the controller (102), the heating control device (104) and the functional driver device (106), wherein the power supply device (108) comprises a ground line contact point, a zero line contact point and multiple live line contact points.

9. The integrated cooker according to claim 8, wherein the functional driver device (106) and the power supply device (108) are arranged inside the cooker body side-by-side, the heating control device (104) is located among the driver device, the power supply device (108) and the controller (102), and the functional device is detachably fixed on the bottom of the cooker body; and the integrated cooker further comprises: a heat dissipating device (110), provided between the heating control device (104) and the functional driver device (106), and/or provided between the heating control device (104) and the power supply device, and configured to dissipate heat from the heating control device (104) and the functional driver device (106).

10. An integrated cooker control method, wherein the integrated cooker control method is applied to the controller (102) of an integrated cooker, the integrated cooker comprises a cooker body, a controller (102), a functional driver device (106), at least one heating control device (104), at least one heating device and at least one functional device; the controller (102), the functional driver device (106), the heating control device (104) and the heating device are all provided inside the cooker body; and the integrated cooker control method comprises: if a heating control instruction is detected, analyzing (902) the heating control instruction and sending a heating control signal to the heating control device (104) to control the working state of the heating device; and if a driving control instruction is detected, analyzing (904) the driving control instruction and sending a driving control signal to the functional driver device (106) to control the working state of the functional device.

11. The integrated cooker control method according to claim 10, wherein the method further comprises: if an initialization instruction is detected, determining a heating flag bit corresponding to the heating control device (104) and a driving flag bit corresponding to the functional driver device (106) after the initialization.

12. The integrated cooker control method according to claim 11, wherein the integrated cooker comprises a communication circuit (200), and the communication circuit (200) comprises at least one slave interface (204), and the at least one slave interface (204) is connected to the heating device and/or the driver device, and the method further comprises: if it is determined that the identification contact point of the first slave interface (204) in the at least one slave interface (204) corresponds to the heating flag bit, sending the heating control signal to the heating device through the first slave interface (204) in the case that the heating control instruction is detected; and if it is determined that the identification contact point of the second slave interface (204) in the at least one slave interface (204) corresponds to the driving flag bit, sending the driving control signal to the driver device through the second slave interface (204) in the case that the driving control instruction is detected.

13. An integrated cooker control device (1000), wherein the integrated cooker control device (1000) is applied to the controller (102) of an integrated cooker, and the integrated cooker comprises: a cooker body, a controller (102), a functional driver device (106), at least one heating control device (104), at least one heating device and at least one functional device; the controller (102), the functional driver device (106), the heating control device (104) and the heating device are all provided inside the cooker body; and the integrated cooker control device (1000) comprises: a first control device (1002), configured to analyze a heating control instruction if the heating control instruction is detected and send a heating control signal to the heating control device (104) to control the working state of the heating device; and
a second control device (1004), configured to analyze a driving control instruction if the driving control instruction is detected and send a driving control signal to the functional driver device (106) to control the working state of the functional device.
